**Europäisches Patentamt**

**European Patent Office**

**Office européen des brevets**

(19)

(11) **EP 1 575 334 A1**

(12) **EUROPEAN PATENT APPLICATION**
published in accordance with Art. 158(3) EPC

(43) Date of publication:
**14.09.2005 Bulletin 2005/37**

(51) Int Cl.⁷: **H04R 17/00**, G01F 1/66

(21) Application number: **03777219.1**

(86) International application number:
**PCT/JP2003/015499**

(22) Date of filing: **03.12.2003**

(87) International publication number:
**WO 2004/057913 (08.07.2004 Gazette 2004/28)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.12.2002 JP 2002370421**

(71) Applicant: **MATSUSHITA ELECTRIC INDUSTRIAL CO., LTD.**
**Osaka 571-8501 (JP)**

(72) Inventors:
• **NAGAHARA, Hidetomo**
  **Kizu-cho, Soraku-gun, Kyoto 619-0224 (JP)**
• **HASHIDA, Takashi**
  **Joto-ku, Osaka-shi, Osaka 536-0017 (JP)**
• **SUZUKI, Masaaki**
  **Joto-ku, Osaka-shi, Osaka 536-0021 (JP)**

(74) Representative: **Grünecker, Kinkeldey, Stockmair & Schwanhäusser Anwaltssozietät**
**Maximilianstrasse 58**
**80538 München (DE)**

(54) **ULTRASONIC TRANSMITTER/RECEIVER, PROCESS FOR PRODUCING THE SAME, AND ULTRASONIC FLOWMETER**

(57) An ultrasonic transducer according to the present invention includes a piezoelectric body 2 for transmitting and receiving an ultrasonic wave and acoustic matching layers 3a and 3b made of a dry gel. The acoustic matching layers 3a and 3b are multiple dry gel layers with mutually different acoustic impedances.

*FIG. 3*

## Description

## TECHNICAL FIELD

The present invention relates to an ultrasonic transducer having an acoustic matching layer and a method for fabricating such a transducer, and also relates to an ultrasonic flowmeter including such an ultrasonic transducer.

## BACKGROUND ART

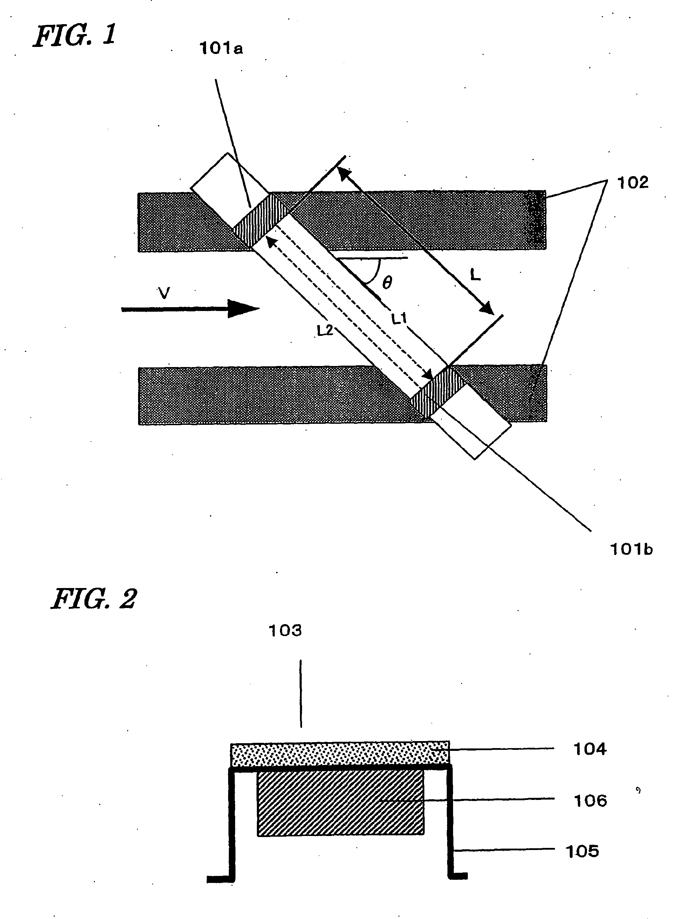

In recent years, an ultrasonic flowmeter has been used as a gas meter, for example. The ultrasonic flowmeter keeps the time that it takes for an ultrasonic wave to go through a propagation path and calculates the flow velocity of a fluid, thereby obtaining its flow rate. FIG. **1** illustrates a cross-sectional structure for a main portion of an ultrasonic flowmeter of that type. The ultrasonic flowmeter is arranged such that a fluid under measurement, of which the flow rate needs to be measured, can flow through a tube. A pair of ultrasonic transducers **101a** and **101b** is provided on the tube wall **102** so as to face each other. Each of the ultrasonic transducers **101a** and **101b** includes an ultrasonic transducer, made of a piezoceramic, for example, as an electromechanical energy converter, and exhibits a resonance characteristic just like a piezoelectric buzzer or a piezoelectric oscillator.

In the state illustrated in FIG. **1**, the ultrasonic transducer **101a** is used as an ultrasonic transmitter and the ultrasonic transducer **101b** is used as an ultrasonic receiver.

If an alternating current voltage, having a frequency in the vicinity of the resonant frequency of the ultrasonic transducer **101a**, is applied to the piezoelectric body (i.e., ultrasonic transducer) in the ultrasonic transducer **101a**, then the ultrasonic transducer **101a** functions as an ultrasonic transmitter to radiate an ultrasonic wave into the fluid. The ultrasonic wave radiated is propagated along a path **L1** and reaches the ultrasonic transducer **101b**. In this case, the ultrasonic transducer **101b** functions as a receiver, which receives the ultrasonic wave and transforms it into a voltage.

Then, the ultrasonic transducer **101b** functions as an ultrasonic transmitter and the ultrasonic transducer 101a functions as an ultrasonic receiver in turn. Specifically, when an alternating current voltage, having a frequency in the vicinity of the resonant frequency of the ultrasonic transducer **101b**, is applied to the piezoelectric body in the ultrasonic transducer **101b**, the ultrasonic transducer 101b radiates an ultrasonic wave into the fluid. The ultrasonic wave radiated is propagated along a path **L2** and reaches the ultrasonic transducer **101a.** The ultrasonic transducer **101a** receives the ultrasonic wave propagated, and transforms it into a voltage.

In this manner, each of the ultrasonic transducers **101a** and **101b** alternately functions as a transmitter and as a receiver. Thus, these transducers **101a** and **101b** are generally called "ultrasonic transducers" collectively.

In the ultrasonic flowmeter shown in FIG. **1**, if the alternating current voltage is applied to one of the ultrasonic transducers continuously, then the ultrasonic transducer radiates an ultrasonic wave continuously, thereby making it difficult to measure the propagation time. For that reason, a burst voltage signal, which uses a pulse signal as a carrier, is normally used as a drive voltage.

Hereinafter, the measuring principle of this ultrasonic flowmeter will be described in further detail.

If an ultrasonic burst signal is radiated from the ultrasonic transducer **101a** by applying the burst voltage signal to the ultrasonic transducer **101a** for driving purposes, then the ultrasonic burst signal will be propagated along the path **L1** and reach the ultrasonic transducer **101b** in a time **t.** The distance of the path **L1,** as well as the path **L2**, is supposed to be **L**.

The ultrasonic transducer **101b** can transform only the ultrasonic burst signal propagated into an electric burst signal at a high SNR. This electric burst signal is amplified electrically and then applied to the ultrasonic transducer **101a** again, thereby making the ultrasonic transducer **101a** radiate another ultrasonic burst signal. Such an apparatus is called a "sing-around type apparatus".

Also, a period of time it takes for an ultrasonic pulse, radiated from the ultrasonic transducer **101a,** to reach the ultrasonic transducer **102b** is called a "sing-around period". The inverse number of the "sing-around period" is called a "sing-around frequency".

In FIG. **1**, the flow velocity of the fluid flowing through the tube is supposed to be V, the velocity of the ultrasonic wave in the fluid is supposed to be C, and the angle defined between the direction in which the fluid is flowing and the direction in which the ultrasonic pulse is propagated is supposed to be θ. If the ultrasonic transducers **101a** and 101b are used as an ultrasonic transmitter and an ultrasonic receiver, respectively, then the following Equation (1) is satisfied:

$$f1=1/t1=(C+V\cos\theta)/L \qquad (1)$$

where t1 is the sing-around period (i.e., the time it takes for the ultrasonic pulse, radiated from the ultrasonic transducer **101a,** to reach the ultrasonic transducer **101b)** and f1 is the sing-around frequency.

Conversely, if the ultrasonic transducers **101b** and **101** are used as an ultrasonic transmitter and an ultrasonic receiver, respectively, then the following Equation (2) is satisfied:

$$f2=1/t2= (C-V\cos\theta)/L \qquad (2)$$

where t2 is the sing-around period and f2 is the sing-around frequency in that situation.

The difference Δf between these two sing-around frequencies is given by:

$$\Delta f = f1 - f2 = 2V\cos\theta/L \qquad (3)$$

According to Equation (3), the flow velocity **V** of the fluid can be obtained from the distance **L** of the ultrasonic wave propagation path and the frequency difference Δf. And the flow rate can be derived from the flow velocity **V**.

Such an ultrasonic flowmeter is required to exhibit high precision. To increase the precision, it is important to appropriately adjust the acoustic impedance of the acoustic matching layer that is provided on the ultrasonic wave transmitting/receiving surface of the piezoelectric body in the ultrasonic transducer. Particularly when the ultrasonic transducer radiates (i.e., transmits) an ultrasonic wave into a gas or receives an ultrasonic wave that has been propagated through a gas, the acoustic matching layer plays an important role.

Hereinafter, the role of the acoustic matching layer will be described with reference to FIG. **2**. FIG. **2** shows a cross-sectional structure of a conventional ultrasonic transducer 103. The ultrasonic transducer 103 shown in FIG. **2** includes a piezoelectric body **106**, which is secured to an inside surface of a sensor case **105,** and an acoustic matching layer **104**, which is secured to an outside surface of the sensor case **105**. Specifically, the acoustic matching layer **104** is bonded to the sensor case 105 with an adhesive such as an epoxy resin, and the piezoelectric body 106 is also bonded to the sensor case by the same technique.

The ultrasonic vibrations of the piezoelectric body **106** are transmitted to the sensor case **106** by way of the adhesive layer and then to the acoustic matching layer **104** by way of the second adhesive layer. After that, the ultrasonic vibrations are radiated as acoustic waves into a gas that contacts with the acoustic matching layer **104** (which will be referred to herein as an "ultrasonic propagation medium").

It is the role of the acoustic matching layer **104** to propagate the vibrations of the piezoelectric body to the gas efficiently. This point will be described in further detail below.

The acoustic impedance Z of a substance is defined by the following Equation **(4)**:

$$Z = \rho \times C \qquad (4)$$

where C is the sonic velocity in the substance and ρ is the density of the substance.

The acoustic impedance is represented herein in the unit of [kg/m$^2$/s], which is the product of [kg/m$^3$] and [m/s].

The acoustic impedance of a gas into which the ultrasonic wave is radiated is greatly different from that of the piezoelectric body. A piezoceramic such as lead zirconate titanate (PZT), which is a typical material for a piezoelectric body, has an acoustic impedance Z1 of about $2.9 \times 10^7$ kg/m$^2$/s. On the other hand, the air has an acoustic impedance Z3 of about $4.0 \times 10^2$ kg/m$^2$/s.

An acoustic wave is easily reflected from the boundary surface between two substances with mutually different acoustic impedances. Also, after having been transmitted through the boundary surface, the acoustic wave will have a decreased intensity. For that reason, a substance, of which the acoustic impedance Z2 is given by the following Equation (5), is inserted between the piezoelectric body and the gas:

$$Z2 = (Z1 \times Z3)^{\frac{1}{2}} \qquad (5)$$

It is known that if a substance having such an acoustic impedance Z2 is inserted, then the reflection from the boundary surface is decreased significantly and the transmittance of the acoustic wave increases.

If the acoustic impedance **Z1** is $2.9 \times 10^7$ kg/m$^2$/s and the acoustic impedance Z3 is $4.0 \times 10^2$ **kg/m$^2$/s,** then the acoustic impedance Z2 that satisfies Equation (5) is about $1.1 \times 10^5$ **kg/m$^2$/s.** The substance having the impedance of $1.1 \times 10^5$ kg/m$^2$/s must satisfy Equation (4) (i.e., Z2=ρ×C) . However, it is very difficult to find such a substance in solid materials. This is because such a substance is a solid but must have a sufficiently low density ρ and a low sonic velocity C.

A material obtained by solidifying a glass balloon or a plastic balloon with a resin material is currently used extensively as a material for the acoustic matching layer. Also, a technique of thermally compressing a hollow glass sphere and a technique of foaming a molten material are disclosed as exemplary methods for preparing such a material preferred for the acoustic matching layer in Japanese Patent Publication No. 2559144, for example.

However, the acoustic impedance of each of these materials is greater than $5.0 \times 10^5$ kg/m$^2$/s and cannot be regarded as satisfying Equation (5). To obtain a high-sensitivity ultrasonic transducer, the acoustic matching layer thereof needs to be made of a material with even smaller acoustic impedance.

To meet such a demand, the applicant of the present application invented an acoustic matching material satisfying Equation (5) fully and disclosed it in Japanese Laid-Open Publication No. 2002-262394. That material is made of a dry gel with durability and has a low density ρ and a low sonic velocity C. An ultrasonic transducer, including an acoustic matching layer made of such a material with very low acoustic impedance (such as a dry gel), can transmit or receive an ultrasonic wave into/through a gas with high efficiency and sensitivity. As a result, an apparatus that can measure the flow rate of the gas with high precision is realized.

Also, the applicant of the present application disclosed our invention of an ultrasonic transducer including two acoustic matching layers in Japanese Patent Application No. 2003-136327. These acoustic matching layers make a multilayer structure as a combination of a dry gel and a porous ceramic, for example, thus providing an ultrasonic transducer that can transmit and receive an ultrasonic wave with even higher sensitivity and in an even broader frequency range than an ultrasonic transducer having a single acoustic matching layer does. Also, a flowmeter including such an ultrasonic transducer would be able to measure the flow rate of a gas with high precision.

## PROBLEMS TO BE SOLVED BY THE INVENTION

Compared with a conventional ultrasonic transducer including an acoustic matching layer made of a material to be obtained by solidifying a glass balloon or a plastic balloon with a resin material, the ultrasonic transducer including an acoustic matching layer made of a dry gel achieves much higher transmission and reception sensitivity. In transmitting and receiving pulsed or burst ultrasonic waves, however, the latter ultrasonic transducer has a narrower frequency range than the conventional ultrasonic transducer and cannot always be used effectively to transmit and receive ultrasonic waves in a short time.

In the ultrasonic transducer including two acoustic matching layers, obtained by bonding a dry gel with another material, these two matching layers are made of mutually different materials, and therefore, cannot make a sufficiently good contact with each other. In addition, since their materials are different, the two acoustic matching layers have different linear expansivities with respect to the same quantity of heat, thus making it difficult to ensure long-term reliability. Furthermore, either the process step of preparing two different materials and bonding two members together or the process step of forming an acoustic matching layer of a dry gel on a compacted porous body of a ceramic, for example, needs to be performed. Thus, the manufacturing process is too complicated to achieve a good yield and cut down the cost without causing problems.

A porous ceramic has a huge number of pores with a relatively large average pore diameter on the order of several tens μm. Accordingly, the ultrasonic wave to be propagated through the porous ceramic comes to have a high frequency. And if its wavelength becomes close to the average pore diameter, then the pores will produce reflection and attenuation to deteriorate the performance of the acoustic matching layer. This is why the ultrasonic transducer, including two acoustic matching layers made of a dry gel and a porous ceramic, respectively, accepts only ultrasonic oscillators with limited operating frequency ranges.

## DISCLOSURE OF INVENTION

An ultrasonic transducer according to the present invention includes a piezoelectric body and an acoustic matching member, which is provided on the piezoelectric body. The acoustic matching member includes at least two acoustic matching layers, which have mutually different acoustic impedances and each of which is made of a dry gel.

In one preferred embodiment, each of the acoustic matching layers has a thickness of 2 μm or more.

In another preferred embodiment, each said acoustic matching layer made of the dry gel includes a porous structure portion with an average pore diameter of 1 μm or less.

In another preferred embodiment, the acoustic impedances of the acoustic matching layers sequentially decrease from the piezoelectric body toward a propagation medium.

In another preferred embodiment, the acoustic impedances of the respective acoustic matching layers included in the acoustic matching member all fall within the range of $2.5 \times 10^3$ kg/m$^2$/s to $1.2 \times 10^7$ kg/m$^2$/s.

In another preferred embodiment, the number of the acoustic matching layers included in the acoustic matching member is two.

In another preferred embodiment, the thicknesses of the respective acoustic matching layers included in the acoustic matching member are one-eighth to one-third as long as the wavelength of an ultrasonic wave to be transmitted and received.

In another preferred embodiment, the acoustic matching layers included in the acoustic matching member are made of an inorganic material.

In another preferred embodiment, the inorganic material is an inorganic oxide.

In another preferred embodiment, the inorganic oxide has a hydrophobized solid skeleton.

An ultrasonic flowmeter according to the present invention includes: a flow rate measuring portion, through which a fluid under measurement flows; a pair of ultrasonic transducers, which is provided for the flow rate measuring portion and which transmits and receives an ultrasonic signal; a measuring circuit for measuring time that it takes to propagate an ultrasonic wave between the pair of ultrasonic transducers; and flow rate calculating means for calculating the flow rate of the fluid based on a signal supplied from the measuring circuit. Each of the ultrasonic transducers is any of the ultrasonic transducers described above.

In one preferred embodiment, the piezoelectric bodies of the ultrasonic transducers are shielded from the fluid under measurement.

In another preferred embodiment, the fluid under measurement is a gas.

An apparatus according to the present invention includes any of the ultrasonic transducers described above.

A method for fabricating an ultrasonic transducer according to the present invention includes the steps of: (a) preparing a piezoelectric body, which has a first surface and a second surface that is opposite to the first surface and which includes electrodes on the first and second surfaces, respectively; and (b) providing two acoustic matching layers of a dry gel, which have mutually different acoustic impedances, on at least one of the first and second surfaces of the piezoelectric body.

In one preferred embodiment, the step (b) includes the steps of: (b1) supplying a first gel material onto at least one of the first and second surfaces of the piezoelectric body; (b2) forming a first wet gel layer by gelling a solution of the first gel material; (b3) supplying a second gel material onto the first wet gel layer; (b4) forming a second wet gel layer by gelling a solution of the second gel material; and (b5) turning the first and second wet gel layers into a first acoustic matching layer and a second acoustic matching layer, respectively, by drying the first and second wet gel layers.

In another preferred embodiment, the step (b4) includes reforming the first wet gel layer such that the first acoustic matching layer will have its acoustic impedance changed.

In another preferred embodiment, the step (b) further includes the steps of: (b6) supplying a third gel material onto the second wet gel layer; and (b7) forming a third wet gel layer by gelling a solution of the third gel material. The step (b5) includes forming a third acoustic matching layer by drying the third wet gel layer.

In another preferred embodiment, the method further includes the step of hydrophobizing the wet gel layer(s) before the step (b5).

## BRIEF DESCRIPTION OF DRAWINGS

FIG. **1** is a cross-sectional view illustrating a conventional ultrasonic flowmeter.

FIG. **2** is a cross-sectional view illustrating a conventional ultrasonic transducer.

FIG. **3** is a cross-sectional view illustrating an ultrasonic transducer according to a first embodiment of the present invention.

FIG. **4** is a graph schematically showing how the acoustic impedance of the first acoustic matching layer changes through gelling process steps.

FIGS. **5(a)** through **5(f)** are cross-sectional views showing the respective process steps for fabricating the ultrasonic transducer of the first preferred embodiment of the present invention.

FIG. **6(a)** is a graph showing the waveform of an ultrasonic wave to be transmitted or received by the ultrasonic transducer of the first preferred embodiment of the present invention, and FIG. **6(b)** is a graph showing the waveform of an ultrasonic wave to be transmitted or received by a comparative example.

FIG. **7(a)** is a cross-sectional view schematically illustrating the acoustic matching layers of this preferred embodiment and FIG. **7(b)** is a cross-sectional view illustrating a first acoustic matching layer made of a porous ceramic and a second acoustic matching layer made of a dry gel.

FIG. **8** is a cross-sectional view illustrating an ultrasonic transducer according to a second embodiment of the present invention.

FIG. **9** is a diagram showing an ultrasonic flowmeter according to an embodiment of the present invention.

FIGS. **10(a)** and **10(b)** are graphs showing how the ultrasonic flowmeter shown in FIG. 5 measures the propagation time.

FIGS. **11(a)** through **11(c)** show exemplary V-path, W-path and I-path arrangements for an ultrasonic flowmeter.

## BEST MODE FOR CARRYING OUT THE INVENTION

Hereinafter, ultrasonic transducers according to preferred embodiments of the present invention will be described with reference to the accompanying drawings.

EMBODIMENT 1

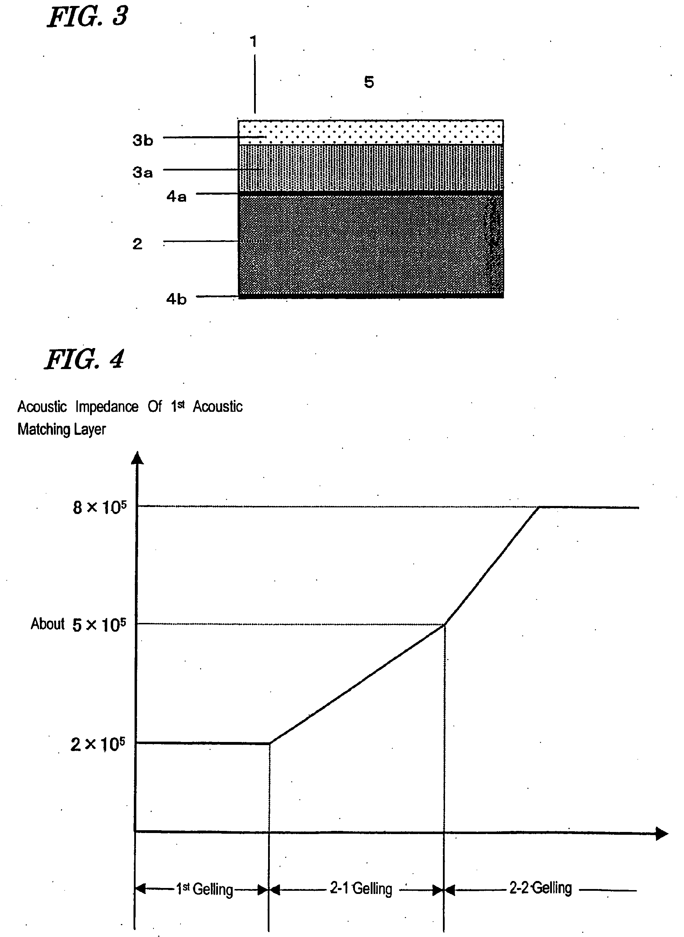

FIG. **3** illustrates a cross section of an ultrasonic transducer according to a first preferred embodiment of the present invention. The ultrasonic transducer **1** of this preferred embodiment includes a piezoelectric body **2**, a pair of electrodes **4a** and **4b** provided on upper and lower surfaces of the piezoelectric body **2**, a first acoustic matching layer 3a provided over one surface of the piezoelectric body **2** with the electrode **4a** interposed between them, and a second acoustic matching layer **3b** provided on the first acoustic matching layer **3a.**

The piezoelectric body **2** is made of a material with piezoelectricity, and is polarized in the thickness direction thereof. When a voltage is applied to the electrodes 4a and **4b** provided on the upper and lower surfaces of the piezoelectric body **2,** the piezoelectric body **2** radiates an ultrasonic wave in response to the voltage signal. The ultrasonic wave is then radiated into an ultrasonic propagation medium **5** (e.g., a gas) by way of the acoustic matching layers **3a** and **3b**. On the other hand, an ultrasonic wave that has been propagated through the ultrasonic propagation medium **5** is transmitted through the acoustic matching layers **3a** and **3b** into the piezoelectric body **2**. The piezoelectric body **2** is deformed responsive to the incoming ultrasonic wave, thereby generating a voltage signal between the electrodes **4a** and **4b**.

The piezoelectric body **2** may be made of an arbitrary material, which may be any of various known materials. Alternatively, the piezoelectric body **2** may be replaced with a known electrostrictive body. The electrodes **4** are preferably made of a metal but may also be made of a non-metallic conductive material.

The two acoustic matching layers **3a** and **3b** have the function of propagating the ultrasonic vibration, produced in the piezoelectric body **2**, to the propagation medium **5** efficiently and the function of transmitting an ultrasonic wave, propagated through the ultrasonic propagation medium **5**, to the piezoelectric body **2** efficiently.

Each of the acoustic matching layers **3a** and **3b** of this preferred embodiment is made of a dry gel. The acoustic matching layers **3a** and **3b** are designed so as to have mutually different acoustic impedances.

The dry gel is a porous body produced by a sol-gel reaction and a material that can have a very small acoustic impedance, which is defined by $\rho \times C$ (i. e., the product of density $\rho$ and sonic velocity C). Thus, by using the acoustic matching layers **3a** and **3b** made of a dry gel, the ultrasonic wave can be transmitted or received through a gas such as the air with very high efficiency.

The dry gel can be obtained by preparing a wet gel and then drying the wet gel. The wet gel can be obtained by preparing a gel material solution and producing a reaction in the gel material solution. The wet gel includes a solid skeleton, which has been formed by the reaction of the gel material solution and which is dissolved in a solvent.

The dry gel, obtained by drying the wet gel, is a porous body, which has continuous pores in the gaps of several nm to several μm of the solid skeleton. Those pores have an extremely small average size of 1 nm to several μm.

As the density of the dry gel is decreased by controlling the manufacturing conditions, the sonic velocity decreases steeply not only in the solid portions of the dry gel but also in the gas portions within the micropores. As a result, the dry gel has a low sonic velocity of 500 m/s or less in a low-density state and exhibits extremely low acoustic impedance. Among other things, a dry gel, of which the solid skeleton and micropores have as small sizes as several nm, has an extremely low sonic velocity. Also, in the micropores of a nanometer scale, the gas induces significant pressure loss. Accordingly, if the acoustic matching layer is made of such a dry gel, the acoustic wave can be radiated at a high sound pressure.

According to the manufacturing method to be described later, even if the same material is used, the acoustic impedance of the dry gel can be controlled to any arbitrary value within a broad range by adjusting the manufacturing process conditions. Also, by changing the manufacturing process conditions, an acoustic matching layer, which has almost the same density but a significantly different sonic velocity, can also be obtained. Accordingly, an acoustic matching member having a desired acoustic impedance distribution can be fabricated by stacking acoustic matching layers made of a dry gel one upon the other.

There is an acoustic impedance mismatch between the piezoelectric body 2 and the ultrasonic propagation medium **5**. Particularly when the ultrasonic propagation medium **5** is a gas, its acoustic impedance is significantly lower than that of a normal piezoelectric body and there is a big mismatch between them. Such an acoustic impedance mismatch will cause the internal reflection of the acoustic wave, thus interfering with efficient transmission and reception of ultrasonic wave. The effect of minimizing such an acoustic impedance mismatch is achieved by the acoustic matching layers **3a** and **3b**. By providing the acoustic matching layers **3a** and **3b**, the internal reflection of the acoustic wave can be minimized and the ultrasonic wave can be radiated efficiently from the piezoelectric body **2** toward the ultrasonic propagation medium **5.**

In transmitting and receiving an ultrasonic wave having a single frequency (i.e., continuous ultrasonic wave), just one acoustic matching layer, of which the thickness is defined by the wavelength of that ultrasonic wave, should be enough. However, a normal ultrasonic transducer usually transmits and receives a pulsed or burst ultrasonic wave. The pulsed or burst ultrasonic wave does not have a single frequency component but multiple frequency components covering a wide range. To transmit and receive such an ultrasonic wave with high sensitivity, the acoustic impedance of the acoustic matching layer is preferably changed gradually between the piezoelectric body 3 and the ultrasonic propagation medium 5. And to change the acoustic impedance gradually, a number of acoustic matching layers with mutually different acoustic impedances need to be stacked one upon the other.

The acoustic impedance of the acoustic matching layer has an important effect on the performance of the ultrasonic transducer. The acoustic impedance of a single acoustic matching layer is usually defined so as to satisfy the Equation (5) mentioned above. However, the acoustic impedances of the two acoustic matching layers are defined so as to satisfy the following Equations (6) and (7), respectively:

$$Z1=(Z0^4 \times Z3^3)^{1/7} \qquad (6)$$

$$Z2=(Z0 \times Z3^6)^{1/7} \qquad (7)$$

where Z0 is the acoustic impedance of the piezoelectric body, Z1 is the acoustic impedance of the first acoustic matching layer, Z2 is the acoustic impedance of the second acoustic matching layer, and Z3 is the acoustic impedance of the propagation medium.

Suppose the propagation medium **5** to transmit and receive an ultrasonic wave there through is the air. At about 20 °C, the air has a density of about 1.18 kg/$m^3$ and a sonic velocity of about 340 m/s. Thus, the acoustic impedance **Z3** of the air becomes approximately equal to $4.0 \times 10^2$ kg/$m^2$/s.

Also, if the piezoelectric body **2** is made of a lead zirconate titanate (PZT) based ceramic, its density is about $7.7 \times 10^3$ kg/$m^3$ and its sonic velocity is about 3,800 m/s. Accordingly, the acoustic impedance **Z0** of the piezoelectric body 2 becomes approximately equal to $2.9 \times 10^7$ kg/m/s.

If these values are substituted into Equation **(6)**, Z1 and Z2 calculate approximately $2.40 \times 10^5$ kg/$m^2$/s and approximately $1.98 \times 10^3$ kg/$m^2$/s, respectively.

Ideally, two acoustic matching layers should be made of materials with such acoustic impedances. However, the acoustic impedance **Z2** the second acoustic matching layer 3b needs to have is very low for a solid material. To achieve that low acoustic impedance value **Z2,** the acoustic matching layer **3b** has to be made of a solid material with a density of $5 \times 10$ kg/$m^2$/s and a sonic velocity of 40 m/s. Nevertheless, it is hard to find an existent solid material with such a density and sonic velocity. And even if such a material could be found, its strength should be too low to use it actually. For that reason, in this preferred embodiment, a dry gel layer with a density of 150 kg/$m^3$, a sonic velocity of 100 m/s, and an acoustic impedance of $1.5 \times 10^4$ kg/$m^2$/s, is used as a material for the second acoustic matching layer 3b to exhibit an acoustic impedance close to the value mentioned above.

Also, in this preferred embodiment, a dry gel layer with a density of 800 kg/$m^3$, a sonic velocity of 1,000 m/s, and an acoustic impedance of $8.0 \times 10^5$ kg/$m^2$/s, is used as a material for the first acoustic matching layer 3a. The acoustic impedance value of the first acoustic matching layer **3a** is set to an acoustic impedance value that increases the transmission and reception sensitivity through one-dimensional computer simulations.

The preferred acoustic impedance value of the first acoustic matching layer **3a** changes with the respective acoustic impedance values of the piezoelectric body **2,** second acoustic matching layer **3b** and propagation medium **5.** The lower the acoustic impedance value of the dry gel as the second acoustic matching layer **3b**, the lower the mechanical strength of the dry gel. Accordingly, the acoustic impedance value should not be decreased to less than a certain value. Thus, in this preferred embodiment, the acoustic impedance of the second acoustic matching layer **3b** is set greater than its ideal value. On the other hand, there are no restrictions on the acoustic impedance setting range of the first acoustic matching layer **3a** from the mechanical strength point of view, and that setting range can be relatively broad.

According to the manufacturing method to be described later, the acoustic impedance of the dry gel can be set to any value falling within a broad range. Thus, in this preferred embodiment, the ultrasonic transducer can exhibit desired performance just as originally designed.

Hereinafter, an exemplary method of manufacturing the ultrasonic transducer **1** including the acoustic matching layers will be described.

First, a piezoelectric body **2** is prepared according to the wavelength of the ultrasonic wave to be transmitted or received. The piezoelectric body **2** is preferably made of a material with high piezoelectricity such as a piezoceramic or a piezoelectric single crystalline material. Examples of preferred piezoceramics include lead zirconate titanate, barium titanate, lead titanate and lead niobate. Examples of preferred piezoelectric single crystalline materials include single crystals of lead zirconate titanate, lithium niobate and quartz.

In this embodiment, the piezoelectric body **2** is made of lead zirconate titanate as a piezoceramic and the frequency of the ultrasonic wave to be transmitted or received is defined at 500 kHz. The piezoelectric body **2** is designed to have a resonant frequency of about 500 kHz so as to transmit or receive such an ultrasonic wave efficiently.

The piezoelectric body **2** has a sonic velocity of about 3,800 m/s as described above. It is known that when the thickness of the piezoelectric body **2** is set equal to a half of the wavelength of the ultrasonic wave, the piezoelectric body **2** causes strong resonance. To obtain such a piezoelectric body **2** that can transmit and receive the 500 Hz ultrasonic wave effectively, a cylindrical piezoelectric body **2** with a diameter of 12 mm and a thickness of about 3.8 mm is made of the piezoceramic and used in this preferred embodiment. Electrodes **4** are provided on the two surfaces of the piezoelectric body **2**, which are separated from each other in the thickness direction (i.e., the upper and lower surfaces thereof), by baking silver thereon. And the piezoelectric body **2** is subjected to a polarization process in the thickness direction.

In this preferred embodiment, acoustic matching layers **3a** and **3b** of a dry gel are provided on one surface of such a piezoelectric body 2. As described above, the first acoustic matching layer **3a** has a sonic velocity of about 1,000 m/s while the second acoustic matching layer **3b** has a sonic velocity of about 100 m/s. Accordingly, the ultrasonic wave has a wavelength of 2 mm in the first acoustic matching layer **3a** and a wavelength of 0.2 mm in the second acoustic matching layer **3b**, respectively.

It is known that when the acoustic matching layers 3a and 3b have their thicknesses adjusted to 1/4 of their respective wavelengths, the acoustic matching layers **3a** and **3b** hardly reflect the ultrasonic wave internally and exhibit high sensitivity. This is why the thicknesses of the first and second acoustic matching layers **3a** and **3b** are set equal to 500 µm and 50 µm, respectively.

It should be noted that the preferred thickness of the acoustic matching layer is not always limited to 1/4 of its ultrasonic wavelength. To expand the frequency range, it is effective to decrease the thickness of the acoustic matching layer to less than 1/4 of the ultrasonic wavelength. A more preferable thickness of the acoustic matching layer is in the range of 1/8 to 1/3 of the ultrasonic wavelength and an even more preferable thickness thereof is in the range of 1/8 to 1/4 of the ultrasonic wavelength. The acoustic matching layer needs to have a thickness of at least 2 µm to function as such.

The dry gel that makes up the acoustic matching layers **3a** and **3b** may be made of any of various materials including inorganic materials and organic polymer materials. The inorganic solid skeleton may be made of silicon dioxide (silica), aluminum oxide (alumina) or titanium oxide, for example. Also, the organic solid skeleton may be made of a general thermosetting resin or thermoplastic resin such as polyurethane, polyurea and phenol resins, polyacrylamide and polymethyl methacrylate.

In this preferred embodiment, a dry gel including silicon dioxide as its solid skeleton is adopted in view of its cost, environmental stability and productivity. The first and second acoustic matching layers **3a** and **3b**, made of such a dry gel, are directly stacked in this order on the principal surface of the piezoelectric body **2**.

Next, a method of making these acoustic matching layers **3a** and **3b** will be described.

In order to stack two or more dry gel layers with mutually different acoustic impedances, a normal gelling process (which will be referred to herein as a "first gelling process") is followed in this preferred embodiment by a second gelling process unlike the conventional method in which the normal gelling process is followed by a drying process.

In the second gelling process, while a gel material solution is being polymerized, a new solid skeleton is formed around the solid skeleton of the wet gel that has been formed in the first gelling process. By creating such a new gel skeleton, the density and sonic velocity (i.e., the acoustic impedance) of the wet gel can be changed.

The second gelling process is roughly subdivided into the following two process steps:

(1) First half of the second gelling process:

This is a process step in which the makeup of the gel material solution is controlled such that the gel material solution will not be gelled outside of the wet gel produced by the first gelling process and in which the density and sonic velocity of the wet gel produced by the first gelling process are changed. This process step will be referred to herein as a "2-1 gelling process step".

In the 2-1 gelling process step, the gel material solution itself is never gelled outside of the wet gel. Inside of the gel produced by the first gelling process, however, the gel material solution grows so as to be deposited on the skeleton formed by the first gelling process. Accordingly, even under such conditions as not to gel the gel material solution itself, this reaction still advances.

This 2-1 gelling process step is effective in a situation where there is no need to change the shape of the wet gel obtained by the first gelling process but there is a need to increase the density and sonic velocity significantly.

(2) Second half of the second gelling process:

This is a process step in which the makeup of the gel material solution is controlled such that the gel material solution will also be gelled outside of the wet gel produced by the first gelling process. This process step will be referred to herein as a "2-2 gelling process step".

In this 2-2 gelling process step, another gel layer can be formed outside of the gel produced by the first gelling process while the density and sonic velocity of the gel are being changed.

To stack a number of dry gel layers one upon the other, the 2-2 gelling process step is essential but the 2-1 gelling process step may be carried out just when needed. There is no definite interface between the layer produced by the first gelling process (which will be referred to herein as a "first layer") and the additional layer produced outside of the first layer by the 2-2 gelling process step (which will be referred to herein as a "second layer"). Rather these first and second layers are continuous with each other due to chemical bonding. In addition, the first and second layers have extremely close thermal expansivities and can make a tighter contact with each other. Accordingly, the long-term reliability can be increased compared to a situation where the lower layer is an acoustic matching layer made of a porous ceramic or any other material.

It should be noted that the combination of the "2-1 gelling process step" and "2-2 gelling process step" will be referred to herein as the "second gelling process" collectively.

In this preferred embodiment, by performing the second gelling process after the first gelling process, the acoustic impedances of the two or more acoustic matching layers can be adjusted to their preferred levels.

In this preferred embodiment, acoustic matching layers consisting of two dry gel layers are formed by performing the following process steps. The acoustic impedances of these two acoustic matching layers are defined as follows:

[First acoustic matching layer 3a]

Density: 800 kg/m$^3$
Sonic velocity: 1,000 m/s
Acoustic impedance: $8.0 \times 10^5$ kg/m$^2$/s
[Second acoustic matching layer 3b]
Density: 150 kg/m$^3$
Sonic velocity: 100 m/s
Acoustic impedance: $1.5 \times 10^4$ kg/m$^2$/s

In the ultrasonic transducer of this preferred embodiment, the first acoustic matching layer 3a has a relatively high acoustic impedance, which is far different from that of the second acoustic matching layer 3b. Thus, it is difficult to form such multiple acoustic matching layers just by the first gelling process and the 2-2 gelling process step.

In making these acoustic matching layers of dry gels, the acoustic impedances of these acoustic matching layers can be controlled to any arbitrary values falling within the range of $2.5 \times 10^3$ kg/m$^2$/s through $1.2 \times 10^7$ kg/m$^2$/s.

The dry gel formed by the first gelling process and the dry gel newly produced by the 2-2 gelling process step preferably have acoustic impedances of about $2 \times 10^5$ kg/m$^2$/s or less considering the stability of the gelling reactions. The acoustic impedance of the dry gel to be the first acoustic matching layer **3a** cannot be increased to the required level just by performing the first gelling process and 2-2 gelling process step.

Thus, in this preferred embodiment, after the first gelling process has been carried out, the 2-1 gelling process step is performed first, thereby increasing the acoustic impedance of the first acoustic matching layer **3a**. Thereafter, by performing the 2-2 gelling process step, the acoustic impedance of the first acoustic matching layer **3a** is further increased and the second acoustic matching layer **3b** is formed as well. In this manner, two acoustic matching layers **3a** and **3b** with appropriate acoustic impedances can be obtained.

FIG. **4** schematically shows how the acoustic impedance of the first acoustic matching layer changes through these gelling process steps. As can be seen from FIG. **4,** the acoustic impedance of the layer obtained by the first gelling process increases through the second gelling process to be performed after that. Also, the conditions of the 2-1 gelling process step to be done after the first gelling process are defined with the increase in acoustic impedance, which is to be brought about in the 2-2 gelling process step, taken into account.

It should be noted that if there is no need to make such a big difference between the acoustic impedances of the two acoustic matching layers, then the 2-1 gelling process step may be omitted to simplify the process.

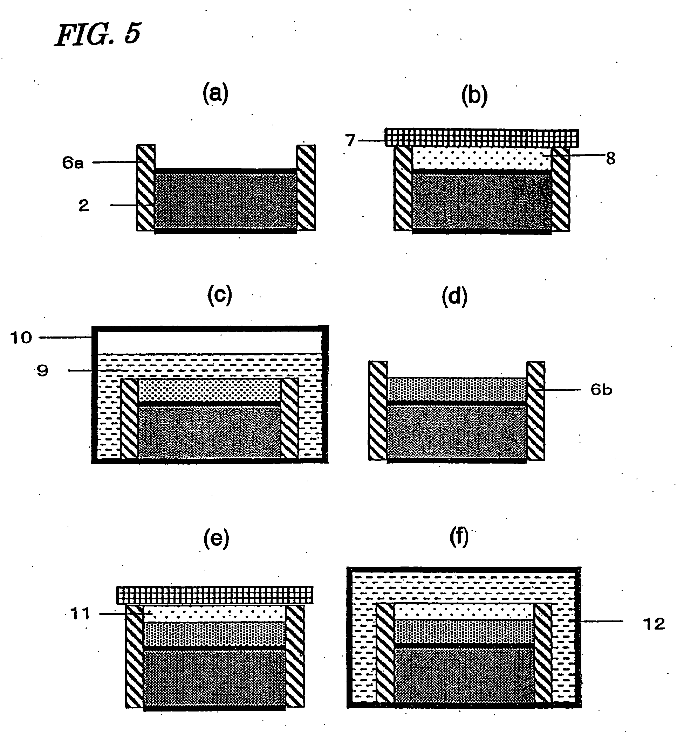

Hereinafter, a method for forming dry gels according to this preferred embodiment will be described in further detail with reference to FIGS. **5(a)** through **5(f)**.

*Process step No. 1:*

*First gelling process (preparing gel* material *solution)*

Tetraethoxysilane, ethanol, water and hydrogen chloride are mixed together at a mole ratio of 1 to 2 to 1 to 0.00078, and then tetraethoxysilane is subjected to a hydrolysis reaction in an isothermal vessel at 65 degrees for three hours. Water and NH$_3$ are further added thereto at a mole ratio of 2.5 to 0.0057 (with respect to tetraethoxysilane), thereby preparing a first gel material solution;

*Process step No. 2:*

*First gelling process (forming first acoustic matching layer)*

The first gel material solution prepared by the method just described is dripped onto one surface of the piezoelectric body **2**. Specifically, first, as shown in FIG. **5(a)**, a cylindrical frame **6a**, which will define the thickness of the first acoustic matching layer **3a**, is provided around the outer surface of the piezoelectric body **2**. Next, the gel material solution is dripped into the space that is defined by the piezoelectric body **2** and frame **6a**. Thereafter, excessive gel material solution is shaken off with a Teflon™ (fluorine resin) plate **7** and the assembly is capped with the Teflon™ plate 7 without removing it.

By providing such a frame **6a**, the thickness of the acoustic matching layer **3a** can be controlled with high precision. The thickness of the acoustic matching layer **3a** has an important effect on the performance of the ultrasonic transducer. For that reason, a high-precision control contributes to enhancing its performance.

Next, the gel material solution is left as it is at 50 °C for about one day, thereby gelling the gel material solution into a wet gel within the space defined by the piezoelectric body **2** and frame **6a**. As a result, a structure consisting of the piezoelectric body **2** and the wet gel **8** is formed as shown in FIG. **5(b)**.

The size of the upper portion of the frame **6a**, sticking out of the upper surface of the piezoelectric body **2**, is defined so as to be approximately a quarter of the wavelength of the ultrasonic wave (with a frequency of 500 kHz) in the first acoustic matching layer. In this preferred embodiment, the dry gel to be the first acoustic matching layer **3a** has a sonic velocity of about 1,000 m/s. Thus, that portion of the frame **6a**, sticking out of the upper surface of the piezoelectric body 2, has a size of 500 μm.

*Process step No. 3:*

*2-1 gelling process step* (adjusting the *acoustic impedance of the first acoustic matching layer)*

The wet gel obtained by the previous process step No. 2 is washed with ethanol, while a 2-1 gel material solution is prepared. As the 2-1 gel material solution, a mixture in which tetraethoxysilane, ethanol and ammonia water (with a normality of 0.1) are mixed together at a volume ratio of 60 to 35 to 5, is used.

The structure consisting of the piezoelectric body 2, frame 6a and wet gel shown in FIG. **5(b)** is immersed in the 2-1 gel material solution in a sealed container **10** as shown in FIG. **5(c)** and left in an isothermal vessel at 70 °C for approximately one day. As a result of this process step, the acoustic impedance of the first acoustic matching layer increases.

*Process step No. 4:*

*2-2 gelling process step (forming second acoustic matching layer)*

Next, as shown in FIG. **5(d),** the structure is picked out of the 2-1 gel material solution and the frame **6a** is removed. Thereafter, another cylindrical frame **6b**, which will define the thickness of the second acoustic matching layer **3b**, is attached instead. The frame **6b** is provided to form the second acoustic matching layer **3b** on the first acoustic matching layer **3a**. The size of the upper portion of the frame **6b**, sticking out of the upper surface of the first acoustic matching layer **3a**, is set so as to define the thickness of the second acoustic matching layer **3b**. In this preferred embodiment, the dry gel to be the second acoustic matching layer **3b** has a sonic velocity of about 100 m/s. Thus, the ultrasonic wave in the second acoustic matching layer **3b** has a wavelength of about 200 µm. Accordingly, the thickness of the second acoustic matching layer **3b** is set equal to 50 µm so as to be one quarter of the wavelength.

Subsequently, the space defined by the first acoustic matching layer **3a** and frame **6a** is filled with the 2-2 gelling material solution. The gel material solution, which was used in the 2-1 gelling process step, remains in the wet gel to be the first acoustic matching layer **3a.** Accordingly, before that space is filled with the 2-2 gelling material solution, the structure is preferably washed with a mixture of ethanol and water.

As the 2-2 gelling material solution, a mixture in which tetraethoxysilane, ethanol and ammonia water (with a normality of 0.05) are mixed together at a mole ratio of 1 to 4 to 3, may be used. The space is filled with the 2-2 gelling material solution to the top of the frame **6a**. As a result of this filling process, the ethanol in the wet gel to be the first acoustic matching layer **3a** is replaced with the 2-2 gelling material solution.

Thereafter, the excessive gel material solution is shaken off with a Teflon™ plate and then the assembly is capped with that Teflon™ plate. Then the gel material solution is left as it is at room temperature for about one day, thereby gelling the gel material solution into a wet gel in the space defined by the piezoelectric body **2** and frame **6a**.

In the meantime, a gelling reaction is newly produced in the wet gel to be the first acoustic matching layer, too, thus increasing the acoustic impedance there.

Consequently, two wet gel layers with mutually different acoustic impedances are formed on the upper surface of the piezoelectric body **2** as shown in FIG. **5 (e)**.

*Process step No. 5:*

*Hydrophobizing process step*

The hydrophobizing process step is not always indispensable but is preferably carried out because the performance is sometimes affected by moisture absorbed. The hydrophobizing process step may be carried out in the following manner. Specifically, after the 2-2 gelling process step has been carried out, the 2-2 gel material solution, remaining in the wet gel to be the acoustic matching layer, is replaced and washed with ethanol. Thereafter, the assembly is immersed in a hydrophobizing solution, obtained by mixing together dimethyldimethoxysilane, ethanol and 10 wt% of ammonia water at a weight ratio of 45 to 45 to 10, at 40 °**C** for approximately one day.

*Process step No. 6:*

*Drying process step*

To produce dry gels from the wet gels obtained by these process steps, a drying process step is carried out. In this preferred embodiment, a supercritical drying technique is adopted as a drying method. As described above, the dry gel is a very small (e.g., nanometer scale) porous body. Thus, depending on the thickness of the skeleton, the bond strength, and the size of the pores, the dry gel may be broken due to the surface tension of the solvent while the solvent is being dried to turn the wet gel into the dry gel.

To prevent such breakage, the supercritical drying technique, which has nothing to do with the surface tension, is preferably adopted. More specifically, after the hydrophobizing solution has been replaced with ethanol, the assembly including the piezoelectric body and wet gels, is introduced into a pressure container, thereby replacing ethanol in the wet gels with liquefied carbon dioxide as shown in FIG. **5(f)**. The liquefied carbon dioxide is further pumped into the container such that the pressure in the container is raised to 10 MPa. Thereafter, the temperature is increased to 50 °C to create a supercritical state in the container. Next, the pressure is gradually decreased with the temperature kept at 50 °C, thereby completing the drying process.

Next, the acoustic characteristic of the ultrasonic transducer, obtained in this manner with the two acoustic matching layers, was evaluated. The results of evaluation will be described with reference to FIGS. **3 (a)** and **3(b)**.

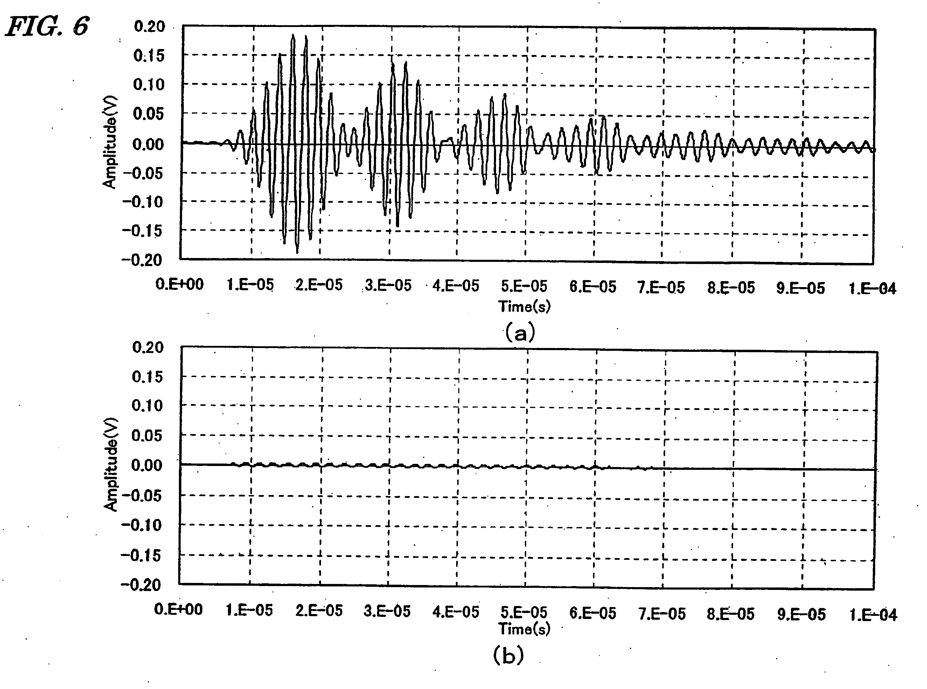

FIG. **6(a)** shows the waveform of an ultrasonic wave to be transmitted or received by the ultrasonic transducer of this preferred embodiment. On the other hand, FIG. **6(b)** shows the waveform of an ultrasonic wave to be transmitted or received by a comparative example in which a glass balloon molded with an epoxy resin was used as an acoustic matching layer. In each of these graphs, the abscissa represents the time and the ordinate represents the signal amplitude. For example, an abscissa " 3.E - 0.5" means "3.0×10" and the unit is seconds (s).

The comparative example and this preferred embodiment are identical with each other except for the configuration of the acoustic matching layer. In the comparative example, the material obtained by molding a glass balloon with a resin has a density of 520 kg/m$^3$, a sonic velocity of 2,500 m/s and an acoustic impedance of $1.3×10^6$ kg/m$^2$/s.

As shown in FIGS. **6(a)** and **6(b),** the ultrasonic transducer of this preferred embodiment achieves at least 50 times as high transmission and reception sensitivity as the ultrasonic transducer including the conventional matching layer.

In the ultrasonic transducer of this preferred embodiment, the two acoustic matching layers are both made of silica (i.e., silicon dioxide). Accordingly, ultrasonic transducers of that type can be produced at a good yield with peeling and other defects minimized. The ultrasonic transducer also guarantees a long-term reliability during its actual use and can operate with good stability.

In the manufacturing method of this preferred embodiment, even though the same material is used, the desired acoustic impedance is still achieved by adjusting the makeup, processing temperature or time of the gel material solution. Accordingly, an acoustic matching layer exhibiting required characteristic can be obtained easily and no time should be wasted in searching for a material that satisfies various design requirements fully.

The ultrasonic transducer of the preferred embodiment described above includes two acoustic matching layers. However, the ultrasonic transducer may also include three or more acoustic matching layers. Even so, those acoustic matching layers may also be made by the same manufacturing method. In that case, however, not all of the three or more acoustic matching layers need to be made of dry gels. Instead, only a layer that should contribute to realizing the preferred acoustic characteristic when made of a dry gel may be made of that dry gel.

In the manufacturing process of the preferred embodiment described above, the first and second acoustic matching layers 3a and 3b are stacked in this order on the piezoelectric body 2. Alternatively, the first and second acoustic matching layers **3a** and **3b** may be prepared somewhere else and then the assembly may be bonded onto the piezoelectric body **2** afterward.

Furthermore, in the preferred embodiment described above, the acoustic matching layers are provided on the electrode that has been formed on the piezoelectric body. However, the acoustic matching layers do not necessarily have to be provided on the electrode but may also be provided on a side surface of the electrode. Also, the acoustic matching layers do not have to make a direct contact with the piezoelectric body but just need to be arranged so as to make an acoustic coupling with the piezoelectric body. As used herein, the "acoustic coupling" is realized when the acoustic matching layers and piezoelectric body are arranged so as to propagate an ultrasonic vibration between them. Accordingly, any member that is less likely to constitute an obstacle to transmitting or receiving an acoustic wave may be interposed between the piezoelectric body and the acoustic matching layers. Examples of such intervening members include the structure supporting member (case) to be described later for the second preferred embodiment.

Next, the structure of the two acoustic matching layers for use in this preferred embodiment will be described with reference to the accompanying drawings.

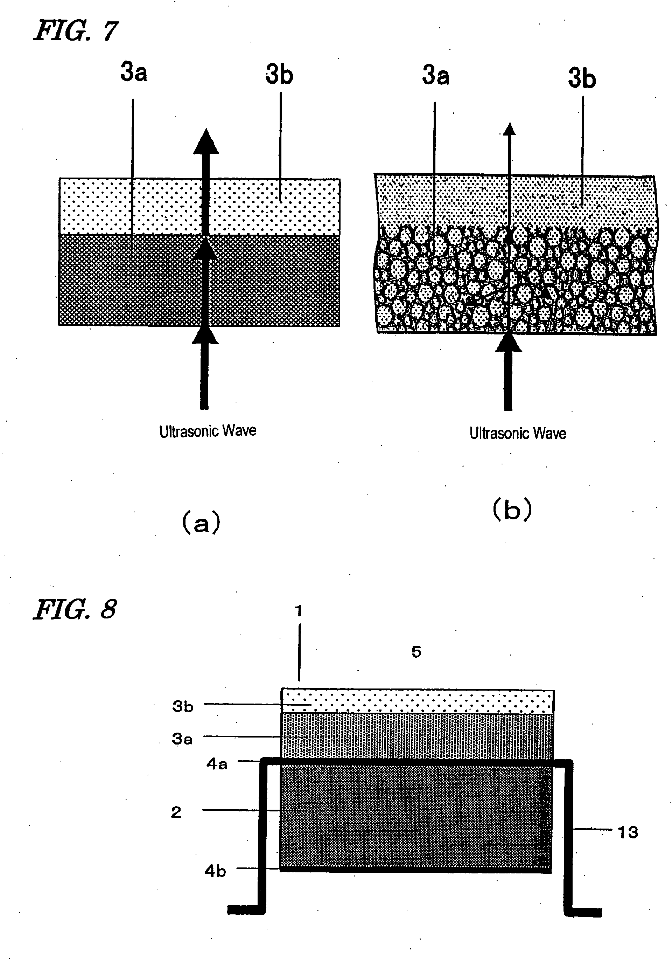

FIG. **7(a)** is a cross-sectional view schematically illustrating the acoustic matching layers **3a** and **3b** of this preferred embodiment. FIG. **7(b)** is a cross-sectional view schematically illustrating a first acoustic matching layer 3a made of a porous ceramic and a second acoustic matching layer 3b made of a dry gel.

In the structure shown in FIG. **7(b)**, the first acoustic matching layer 3a made of the porous ceramic has such a big pore diameter that the ultrasonic wave being propagated through the first acoustic matching layer **3a** is easily reflected or attenuated inside the first acoustic matching layer **3a.** Accordingly, the acoustic matching layer made of the porous ceramic does not have a good characteristic. A porous ceramic is usually made by sintering powder particles with a mean particle size of 1 μm or more and has an average pore diameter of several tens μm or more.

In contrast, in the structure of this preferred embodiment shown in FIG. **7(a)**, the dry gels that make up the two acoustic matching layers **3a** and **3b** are porous bodies with very small pores on the order of several nm to several μm. Accordingly, even if the incoming ultrasonic wave has a relatively high frequency, its wavelength should be sufficiently longer than the pore diameters. Thus, the ultrasonic wave is less likely to be reflected or attenuated in the acoustic matching layer.

Consequently, the ultrasonic transducer of this preferred embodiment has high ultrasonic wave transmitting ability.

To prevent the ultrasonic wave from being reflected or attenuated by the pores, the average pore diameter is preferably decreased to about one-tenth or less of the wavelength of the ultrasonic wave. In the porous ceramic, however, it is virtually impossible to decrease the pore diameters to a nanometer scale. Supposing the porous ceramic has a sonic velocity of about 2,000 m/s and an average pore diameter of about 50 µm, an ultrasonic wave with a frequency of 4 MHz or less can be transmitted or received efficiently. However, it is impractical to transmit or receive an ultrasonic wave having a frequency exceeding 4 MHz. In contrast, since the dry gel has an average pore diameter of several nm, even an ultrasonic wave having a frequency exceeding 4 MHz can be transmitted or received efficiently.

**EMBODIMENT 2**

Hereinafter, an ultrasonic transducer according to a second preferred embodiment of the present invention will be described with reference to FIG. **8**.

The ultrasonic transducer of this preferred embodiment has the same configuration as the ultrasonic transducer of the first preferred embodiment described above except that a structure supporting member is provided between the piezoelectric body 2 and the first acoustic matching layer **3a**.

The structure supporting member 13 includes a disklike supporting portion, on which the acoustic matching layer **3a** and so on are fixed, and a cylindrical portion that extends continuously from the disklike supporting portion in the axial direction. The end of the cylindrical portion has an L-cross section such that the structure supporting member **13** can be easily secured to a shielding plate (not shown) or another apparatus.

The acoustic matching layers **3a** and **3b** are stacked on the surface of the structure supporting member 13, while the piezoelectric body 2 is provided on the back surface of the supporting portion. By using such a structure supporting member 13, the ultrasonic transducer can be handled very easily.

The structure supporting member may be a sealable container (e.g., sensor case). In that case, if the open end of the cylindrical portion of the structure supporting member 13 is closed up with the shielding plate or any other suitable member and if the inner space of the structure supporting member 13 is filled with an inert gas, then the piezoelectric body 2 can be shielded from the fluid under measurement.

A voltage is applied to the piezoelectric body 2. Accordingly, if the piezoelectric body were exposed to a combustible gas, then the combustible gas might fire. However, such firing can be avoided by using a sealed container as the structure supporting member 13 such that the inside space including the piezoelectric body is shielded from the external fluid. Thus, the ultrasonic wave can be transmitted and received safely even through a combustible gas.

Also, even if the external gas through which the ultrasonic wave is transmitted and received is not combustible, the piezoelectric body 2 is also preferably shielded from such an external gas, because the gas may still react with the piezoelectric body 2 and deteriorate the property of the piezoelectric body 2. Then, the deterioration of the piezoelectric body 2 can be minimized and highly reliable operation can be maintained for a sufficiently long time.

A portion of the structure supporting member 13, which is sandwiched between the piezoelectric body 2 and the first acoustic matching layer 3a, does not function as an acoustic matching layer. Accordingly, to prevent the structure supporting member 13 from constituting any acoustic obstacle, the thickness of that portion of the structure supporting member 13, located between the piezoelectric body 2 and the first acoustic matching layer 3a, is preferably at most equal to about one eighth of the wavelength of the ultrasonic wave to be transmitted or received.

In this preferred embodiment, the structure supporting member 13 is made of a stainless steel and has a thickness of 0.2 mm in that portion.

A sonic velocity in the stainless steel is about 5,500 m/s and the wavelength of an ultrasonic wave having a frequency of 500 kHz is about 11 mm. Accordingly, the thickness of 0.2 mm is equivalent to about one fifty-fifth of the wavelength of the ultrasonic wave. Thus, the presence of the structure supporting member 13 would constitute almost no acoustic obstacle.

The material of the structure supporting member 13 does not have to be a metallic material such as stainless steel but may also be selected from the group consisting of ceramics, glasses and resins according to the specific purpose. In this preferred embodiment, to isolate the piezoelectric body from the external fluid just as intended and to make the structure supporting member 13 strong enough to prevent the piezoelectric body and the external fluid from contacting with each other even when the structure supporting member is subject to any mechanical shock, the structure supporting member 13 is made of a metallic material. Thus, even if the ultrasonic wave is transmitted or received through a gas with combustibility or explosiveness, a high degree of safety is still guaranteed.

However, if the ultrasonic wave is transmitted or received through a safe gas, the structure supporting member may also be made of a resin or any other material to cut down the cost.

EMBODIMENT 3

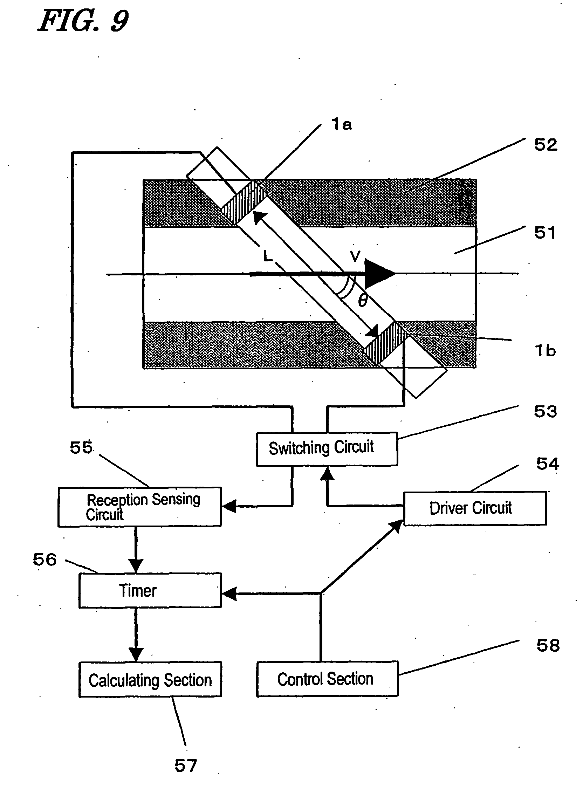

Hereinafter, an ultrasonic flowmeter according to an embodiment of the present invention will be described with reference to FIG. 9.

The ultrasonic flowmeter of this preferred embodiment is arranged such that a fluid under measurement flows at a velocity V in a tube that functions as a flow rate measuring portion 51. The ultrasonic transducers 1a and 1b of the present invention are provided on the tube wall 52 of the flow rate measuring portion 51 so as to face each other.

At a point in time, the ultrasonic transducer 1a functions as an ultrasonic transmitter and the ultrasonic transducer 1b functions as an ultrasonic receiver. At another point in time, however, the ultrasonic transducer 1a functions as an ultrasonic receiver and the ultrasonic transducer 1b functions as an ultrasonic transmitter. This switching is done by a switching circuit **53**.

The ultrasonic transducers **1a** and **1b** are connected to a driver circuit **54** and a reception sensing circuit **55** by way of the switching circuit **53**. The driver circuit **54** drives the ultrasonic transducers **1a** and **1b**. The reception sensing circuit **55** senses an ultrasonic pulse received. The output of the reception sensing circuit **55** is supplied to a timer **56**, which measures the propagation time of the ultrasonic pulse.

The output of the timer **56** is passed to a calculating section **57** for calculating the flow rate. The calculating section **57** calculates the velocity **V** of the fluid, flowing through the flow rate measuring portion **51**, based on the ultrasonic pulse propagation time obtained, thereby deriving the flow rate. The driver circuit **54** and timer **56** are connected to a control section **58**, and are controlled in response to a control signal supplied from the control section **58.**

Hereinafter, it will be described in further detail how this ultrasonic flowmeter operates.

Suppose an LP gas is allowed to flow as a fluid under measurement through the flow rate measuring portion **51**. The ultrasonic transducers **1a** and **1b** are supposed to have a drive frequency of about 500 kHz. The control section **58** outputs a transmission start signal to the driver circuit **54** and, at the same time, instructs the timer **56** to start measuring time.

On receiving the transmission start signal, the driver circuit 54 drives the ultrasonic transducer **1a** such that the ultrasonic transducer **1a** transmits an ultrasonic pulse. The ultrasonic pulse transmitted is propagated through the flow rate measuring portion 51 and received at the ultrasonic transducer **1b.** The ultrasonic pulse received is transformed by the ultrasonic transducer **1b** into an electric signal, which is then output to the reception sensing circuit **55.**

The reception sensing circuit **55** determines the time at which the signal was received and stops the timer **56**. Then, the calculating section **57** calculates the propagation time t1.

Next, the switching circuit **53** switches the ultrasonic transducers **1a** and **1b** to be connected to the driver circuit **54** and the reception sensing circuit **55**. Thereafter, the control section **58** outputs a transmission start signal to the driver circuit 54 again and, at the same time, instructs the timer **56** to start measuring time.

However, as opposed to the flow in which the propagation time **t1** was measured, an ultrasonic pulse is transmitted from the ultrasonic transducer **1b** and then received at the ultrasonic transducer **1a** and the calculating section **57** calculates the propagation time **t2**.

Suppose the distance between the centers of the ultrasonic transducers **1a** and **1b** is **L,** the sonic velocity in the LP gas in no wind condition is C, the flow velocity in the flow rate measuring portion **51** is V, and the angle defined between the direction in which the fluid under measurement flows and the line that connects together the centers of the ultrasonic transducers **1a** and **1b** is θ.

The propagation times **t1** and **t2** are obtained by actual measurement and the distance **L** is already known. Accordingly, the flow velocity **V** can be obtained by measuring the times **t1** and **t2**, and the flow rate can be derived from the flow velocity **V**.

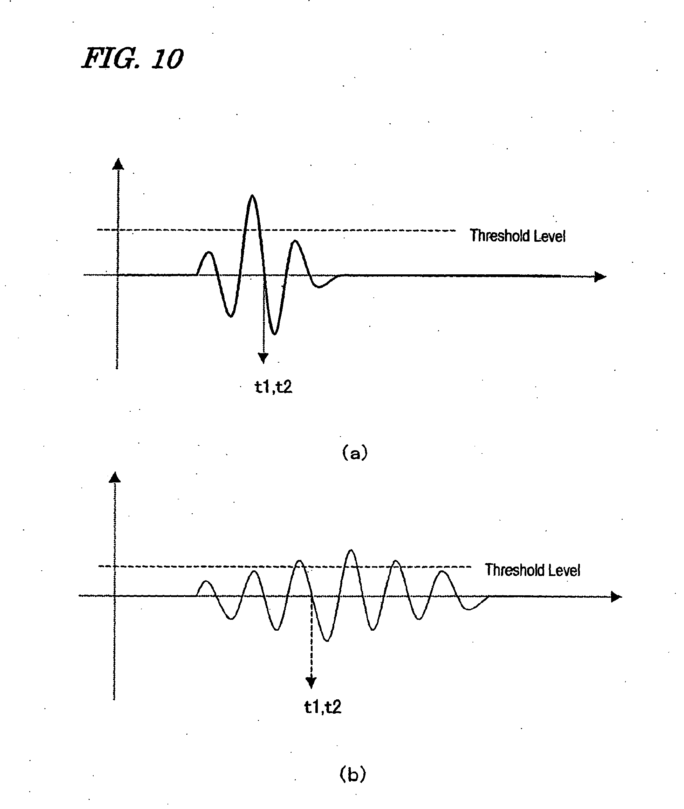

In such an ultrasonic flowmeter, the propagation times **t1** and **t2** are measured by a so-called "zero-cross method". In this method, an appropriate threshold level is defined with respect to a received waveform such as that shown in FIG. 10(a), and the amount of time it takes for the waveform to cross the zero level after having exceeded the threshold level is measured.

If the received signal has a bad SNR, the point in time at which the waveform crosses the zero level shifts depending on the noise level. In that case, t1 and t2 may not be measured accurately and it may be difficult to obtain an accurate flow rate.

However, by using the ultrasonic transducers of the present invention as ultrasonic transducers for such an ultrasonic flowmeter, the SNR of the received signal can be increased and t1 and t2 can be measured highly accurately.

If the received signal rises more slowly (i.e., has a narrower band width) as shown in FIG. **10(b)** than the received signal shown in FIG. **10(a)**, then the peaks of the waveform of the received signal, for which t1 and t2 are measured, change with respect to the predetermined threshold level, thus possibly causing errors in measurement.

However, the ultrasonic transducer of the present invention can operate appropriately in a broad frequency range. Thus, the received signal rises steely enough and the flow rate can be measured accurately and constantly. It should be noted that each of the t1 and t2 values is preferably the average of a number of values measured.

To be able to transmit or receive an ultrasonic wave in a broad frequency range means that the signal also falls quickly. Accordingly, even if measurements are repeatedly carried out at shorter intervals, no transmitted or received signal will be affected by the previous transmitted or received signal. As a result, even if the measurements are carried out at a high iterative frequency, the measurements can still be done instantaneously. Thus, a flowmeter that can sense the leakage of a gas, for example, immediately is realized.

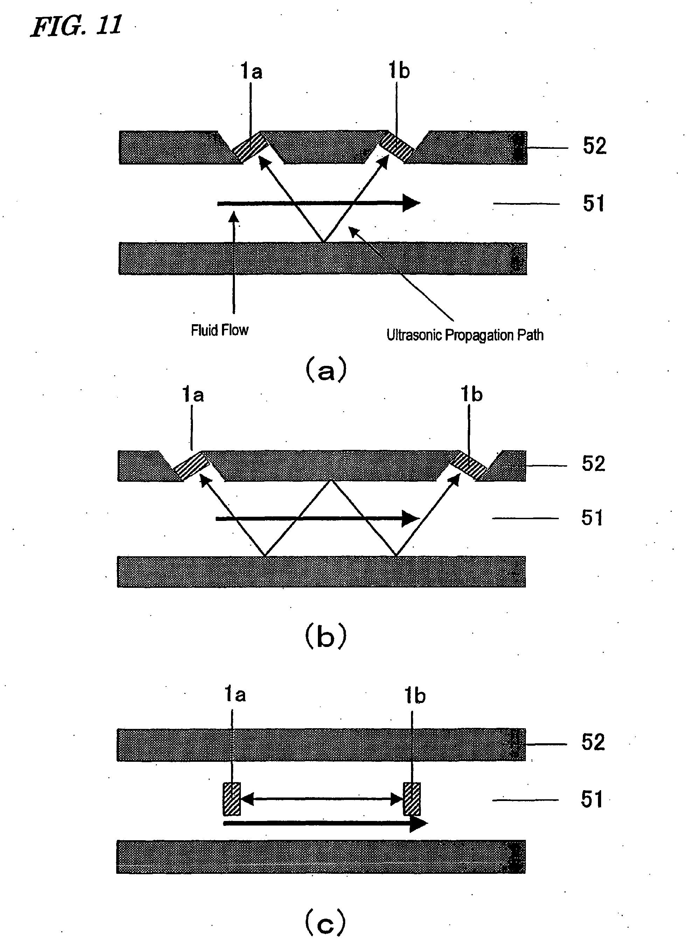

In the preferred embodiment described above, the ultrasonic transducer is arranged so as to make a so-called "Z-path" as shown in FIG. **9**. However, the present invention is in no way limited to this specific arrangement but may be applied to any of the alternative arrangements shown in FIGS. **11(a)** through **11(c)**, which show arrangements called a "V-path", a "W-path" and an "I-path", respectively. In any of these arrangements, the ultrasonic transducer of the present invention can achieve the effects described above.

In the preferred embodiments described above, the upper surface of the uppermost acoustic matching layer (i.e., first acoustic matching layer) is exposed. Optionally, this surface may be covered with a protective coating with a thickness of about 10 μm or less. Such a protective coating contributes to avoiding direct exposure of the acoustic matching layer to the air and maintaining the property of the acoustic matching layer good for a long time. The protective coating may be a (single or multilayer) film of aluminum, silicon dioxide, a low-melting glass or a polymer. The protective coating may be deposited by a sputtering process or a CVD process.

## INDUSTRIAL APPLICABILITY

According to the present invention, multiple acoustic matching layers made of a dry gel are stacked one upon the other, thereby providing a high-sensitivity broadband ultrasonic transducer. In addition, those matching layers are made of the same material, and are less likely to peel from each other. As a result, the production yield and operating reliability can be both increased.

Furthermore, a number of acoustic matching layers of the same material may be provided so as to have any desired combination of acoustic impedances. Thus, an ultrasonic transducer can be fabricated just as originally designed and yet there is no need to newly develop or search for a suitable material for the acoustic matching layers, which are very beneficial.

## Claims

1. An ultrasonic transducer comprising a piezoelectric body and an acoustic matching member, which is coupled acoustically to the piezoelectric body,
   wherein the acoustic matching member includes at least two acoustic matching layers, which have mutually different acoustic impedances and each of which is made of a dry gel.

2. The ultrasonic transducer of claim 1, wherein the at least two acoustic matching layers are chemically bonded together at their interface.

3. The ultrasonic transducer of claim 1, wherein each of the acoustic matching layers has a thickness of 2 μm or more.

4. The ultrasonic transducer of one of claims 1 to 3, wherein each said acoustic matching layer made of the dry gel includes a porous structure portion with an average pore diameter of 1 μm or less.

5. The ultrasonic transducer of one of claims 1 to 4, wherein the acoustic impedances of the acoustic matching layers sequentially decrease from the piezoelectric body toward a propagation medium.

6. The ultrasonic transducer of one of claims 1 to 5, wherein the acoustic impedances of the respective acoustic matching layers included in the acoustic matching member all fall within the range of $2.5 \times 10^3$ kg/m$^2$/s to $1.2 \times 10^7$ kg/m$^2$/s.

7. The ultrasonic transducer of one of claims 1 to 6, wherein the number of the acoustic matching layers included in the acoustic matching member is two.

8. The ultrasonic transducer of one of claims 1 to 7, wherein the thicknesses of the respective acoustic matching layers included in the acoustic matching member are one-eighth to one-third as long as the wavelength of an ultrasonic wave to be transmitted and received.

9. The ultrasonic transducer of one of claims 1 to 8, wherein the acoustic matching layers included in the acoustic matching member are made of an inorganic material.

10. The ultrasonic transducer of claim 9, wherein the inorganic material is an inorganic oxide.

11. The ultrasonic transducer of claim 10, wherein the inorganic oxide has a hydrophobized solid skeleton.

12. The ultrasonic transducer of claim 1, further comprising a structure supporting member that covers the piezoelectric body,
    wherein the acoustic matching member is supported on the structure supporting member.

13. An ultrasonic flowmeter comprising:

    a flow rate measuring portion, through which a fluid under measurement flows;
    a pair of ultrasonic transducers, which is provided for the flow rate measuring portion and which transmits and receives an ultrasonic signal;

a time-measuring portion for measuring time that it takes to propagate an ultrasonic wave between the pair of ultrasonic transducers; and flow rate calculating means for calculating the flow rate of the fluid based on a signal supplied from the time-measuring portion,

wherein each of the ultrasonic transducers is the ultrasonic transducer of one of claims 1 to 12.

14. The ultrasonic flowmeter of claim 13, wherein the piezoelectric bodies of the ultrasonic transducers are shielded from the fluid under measurement.

15. The ultrasonic flowmeter of claim 13 or 14, wherein the fluid under measurement is a gas.

16. An apparatus comprising the ultrasonic transducer of one of claims 1 to 12.

17. A method for fabricating an ultrasonic transducer, the method comprising the steps of:

(a) preparing a piezoelectric body, which has a first surface and a second surface that is opposite to the first surface and which includes electrodes on the first and second surfaces, respectively; and
(b) providing two acoustic matching layers of a dry gel, which have mutually different acoustic impedances, on at least one of the first and second surfaces of the piezoelectric body.

18. The method of claim 17, wherein the step (b) includes the steps of:

(b1) supplying a first gel material onto at least one of the first and second surfaces of the piezoelectric body;
(b2) forming a first wet gel layer by gelling a solution of the first gel material;
(b3) supplying a second gel material onto the first wet gel layer;
(b4) forming a second wet gel layer by gelling a solution of the second gel material; and
(b5) turning the first and second wet gel layers into a first acoustic matching layer and a second acoustic matching layer, respectively, by drying the first and second wet gel layers.

19. The method of claim 18, wherein the step (b4) includes reforming the first wet gel layer such that the first acoustic matching layer will have its acoustic impedance changed.

20. The method of claim 19, wherein the step (b) further includes the steps of:

(b6) supplying a third gel material onto the second wet gel layer; and
(b7) forming a third wet gel layer by gelling a solution of the third gel material,

wherein the step (b5) includes forming a third acoustic matching layer by drying the third wet gel layer.

21. The method of one of claims 17 to 20, further comprising the step of hydrophobizing the wet gel layer (s) before the step (b5).

*FIG. 1*

101a

102

V

θ

L

L1

L2

101b

*FIG. 2*

103

104

106

105

## FIG. 3

## FIG. 4

Acoustic Impedance Of 1st Acoustic
Matching Layer

# FIG. 5

(a)

6a

2

(b)

7

8

(c)

10

9

(d)

6b

(e)

11

(f)

12

FIG. 6

(a)

(b)

EP 1 575 334 A1

*FIG. 7*

3a    3b          3a    3b

Ultrasonic Wave          Ultrasonic Wave

(a)          (b)

*FIG. 8*

1
5
3b
3a
4a
2
4b
13

# FIG. 9

*FIG. 10*

(a)

(b)

*FIG. 11*

Fluid Flow

Ultrasonic Propagation Path

(a)

(b)

(c)

## INTERNATIONAL SEARCH REPORT

| International application No. |
| --- |
| PCT/JP03/15499 |

**A. CLASSIFICATION OF SUBJECT MATTER**
Int.Cl⁷ H04R17/00, G01F1/66

According to International Patent Classification (IPC) or to both national classification and IPC

**B. FIELDS SEARCHED**

Minimum documentation searched (classification system followed by classification symbols)
Int.Cl⁷ H04R17/00, G01F1/66

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2002-262394 A (Matsushita Electric Industrial Co., Ltd.), 13 September, 2002 (13.09.02), Par. Nos. [0015] to [0023], [0029]; all drawings (Family: none) | 1-21 |
| Y A | JP 10-75953 A (Aloka Co., Ltd.), 24 March, 1998 (24.03.98), Par. No. [0038]; all drawings (Family: none) | 5 1-4,6-21 |
| Y A | JP 2002-135895 A (Matsushita Electric Industrial Co., Ltd.), 10 May, 2002 (10.05.02), Par. No. [0011]; all drawings (Family: none) | 6-15 1-5,16-21 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 30 January, 2004 (30.01.04) | Date of mailing of the international search report 10 February, 2004 (10.02.04) |
| --- | --- |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

| International application No. |
| --- |
| PCT/JP03/15499 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 6-86397 A  (Yasuhiro KOIKE, Yokogawa Electric Corp.),<br>25 March, 1994 (25.03.94),<br>Par. No. [0010]; Fig. 1<br>(Family: none) | 5<br>1-4,5-21 |

Form PCT/ISA/210 (continuation of second sheet) (July 1998)